# FASCICULE DE BREVET EUROPEEN

(11) **EP 2 606 078 B1**
(45) Date de publication et mention de la délivrance du brevet: **25.06.2014**
(21) Numéro de dépôt: 11751936.3
(22) Date de dépôt: 12.07.2011
(51) Int. Cl.: C08F 290/06, C09D 155/00, D21H 17/34, D21H 19/56, D21H 21/10

(54) **UTILISATION EN SAUCES DE COUCHAGE PAPETIÈRES DE POLYMÈRES (MÉTH)ACRYLIQUES PEIGNES AMPHIPHILES ET NON HYDROSOLUBLES**
VERWENDUNG VON AMPHIPHILEN UND WASSERUNLÖSLICHEN KAMM(METH)ACRYLPOLMEREN FÜR EINE PAPIERSTREICHMASSE
USE, IN PAPER COATING SLIPS, OF AMPHIPHILIC AND NON-WATER-SOLUBLE COMB (METH)ACRYLIC POLYMERS

(30) Priorité: 19.08.2010 FR 1056659
(43) Date de publication de la demande: 26.06.2013
(73) Titulaire: Coatex S.A.S, 69730 Genay (FR)
(72) Inventeur: SUAU, Jean-Marc, F-69480 Lucenay (FR); GUILLOT, Murielle, F-69250 Albigny sur Saone (FR); DUPONT, Francois, 69004 Lyon (FR)
(74) Mandataire: Fiorucci, Hélène
(86) Numéro de dépôt international: PCT/IB2011/001652
(87) Numéro de publication internationale: WO 2012/023010

(56) Documents cités:
- WO-A1-2007/069037

## Description

La présente invention concerne le domaine du papier et porte plus particulièrement sur certains additifs connus sous l'expression de « modificateurs de rhéologie » et « agents rétenteurs d'eau ». Ces derniers entrent dans la formulation des sauces de couchage, qui sont des formulations aqueuses destinées à être appliquées à la surface de la feuille de papier.

L'invention concerne plus précisément la mise en oeuvre de certains additifs polymériques ayant la propriété d'augmenter la viscosité des sauces sous bas gradient de cisaillement et de la diminuer à haut gradient, tout en améliorant la rétention d'eau desdites sauces. Ce compromis correspond à l'obtention d'une sauce :
- manipulable (augmentation de la viscosité à bas gradient),
- exploitable en couchage à haute vitesse ou extrait sec élevé (diminution de la viscosité à haut gradient, pour contrebalancer l'augmentation de la pression de lame),
- dont l'eau et les substances hydrosolubles migrent peu au sein de la feuille de papier (on limite ainsi l'évolution de la rhéologie de la sauce non utilisée et recyclée dans le procédé de couchage).

Ces additifs sont des polymères non hydrosolubles à structure peigne, disposant d'un squelette (méth)acrylique, sur lequel sont greffées des chaînes latérales contenant au moins un monomère hydrophobe du type styrène ou ester (méth)acrylique en C1 à C4 et au moins un monomère hydroxy ou méthoxy polyalkylène glycol. Les teneurs en monomères sont telles que ledit polymère est amphiphile, car il est à la fois riche en monomère hydrophobe et en monomère polyalkylène glycol.

Dans le cadre de la fabrication de la feuille de papier par couchage, on dépose sur la surface du papier support une composition aqueuse dénommée sauce de couchage dont la fonction est de conférer à ladite feuille un certain nombre de propriétés, comme l'opacité, la brillance, la blancheur ou encore l'imprimabilité par les procédés d'impression offset ou héliogravure.

Ces formulations sont constituées d'eau, d'une ou plusieurs charges minérales, d'un ou plusieurs liants hydrosolubles ou non, ainsi que de divers additifs tels que des dispersants, des agents rétenteurs d'eau, des azurants optiques, des modificateurs de rhéologie, etc...

Au niveau de la rhéologie de la sauce, il est tout d'abord important de disposer d'un produit aisément pompable et filtrable dans les circuits d'alimentation du procédé de couchage et ne présentant pas de tendance à la formation de mousses ou d'éclaboussures ainsi qu'une sédimentation trop rapide. Cette exigence correspond à une augmentation de la viscosité sous bas gradient de cisaillement, ou viscosité Brookfield™ mesurée à 100 tours / minute et à 25°C avec le dispositif du même nom, sans quoi la sauce est trop liquide.

Une autre caractéristique rhéologique importante est la viscosité sous haut gradient de cisaillement, telle qu'exprimée à travers une valeur de viscosité ACAV à 25°C mesurée dans un viscosimètre capillaire où la sauce peut subir des gradients de cisaillement élevés (de 10⁵ à 3 x 10⁶ s⁻¹) du même ordre de grandeur que ceux observés pendant le procédé de couchage lors de l'application de la lame de couchage raclant l'excès de sauce déposée. La viscosité sous haut gradient de cisaillement est un déterminant de la pression de lame à exercer. Plus elle est importante, plus la pression de lame doit être élevée pour le contrôle du poids de couche déposé.

Or l'augmentation de l'extrait sec des sauces et des vitesses de couchage correspond à une tendance observée depuis quelques années car elle génère des avantages économiques et/ou qualitatifs. Néanmoins, l'augmentation de l'extrait sec conduit à une élévation de la viscosité sous cisaillement et par conséquence à une hausse des pressions de lame nécessaires. Les vitesses de couchage plus élevées provoquent quant à elles une augmentation de la force hydraulique sur la lame et ainsi de la pression à exercer, ce qui peut conduire à des débordements de la sauce (« baves » ou « perles »). Cette problématique est relatée dans le document WO 84 / 04491.

A cette double exigence, s'ajoute la nécessité de réduire le phénomène de migration de l'eau et des espèces hydrosolubles à travers le papier. On cherche à réduire au maximum cette migration, en vue d'éviter une évolution de la rhéologie de la sauce de couchage non utilisée et recyclée dans le procédé de couchage. On parle de phénomène de « rétention d'eau » qu'on cherche à améliorer, c'est-à-dire à augmenter.

En matière de modificateurs de rhéologie et d'agents rétenteurs d'eau, on a développé depuis quelques années une classe particulière de polymères peignes disposant d'un squelette (méth)acrylique avec des chaînes latérales de type hydroxy ou méthoxy polyalkylène glycol contenant éventuellement un monomère hydrophobe tel que l'acrylate d'éthyle ou de butyle. Il s'agit de solutions aqueuses de polymères hydrosolubles, comme notamment développées par la société COATEX™ à travers sa gamme de produits Rheocarb™ dans le domaine du papier.

De nombreux brevets d'utilisation décrivent aujourd'hui les propriétés applicatives de ces structures dans une sauce de couchage : WO 01/96007 A1, WO 04/044022 A1, WO 04 / 041883 A1, WO 07 / 069037 A1 et WO 08 / 149226 A1. Ces polymères peuvent être introduits dans la sauce de couchage par l'intermédiaire de la suspension de matières minérales dont ils améliorent la rhéologie (WO 01/96007 A1). Outre leur capacité à augmenter la viscosité Brookfield™ de la sauce, ils permettent d'améliorer l'azuration optique (WO 04 / 044022 A1) et la brillance (WO 04 / 041883 A1) de celle-ci. Ils sont aussi connus pour augmenter la rétention d'eau de la sauce (WO 07 / 069037 A1), mais aussi leur viscosité sous haut gradient de cisaillement (WO 08 / 149226 A1).

La Demanderesse souligne que, dans ces documents :
- le monomère hydrophobe du type acrylate d'éthyle ou styrène est toujours facultatif (comme notamment indiqué dans les WO 01/96007 A1, WO 04 / 044022 A1, WO 04 / 041883 A1 et WO 07 / 069037 A1) ;
- lorsqu'il est présent, sa concentration en poids est toujours inférieure à 20 % du poids total des monomères engagés (5 % en poids d'acrylate d'éthyle dans l'essai n° 13 du document WO 04 / 044022 et de 4,5 % à 19,5 % en poids d'acrylate d'éthyle dans les essais n° 4 à 7 du document WO 01/96007 A1) ;
- il n'est fait aucune allusion au rôle possible joué par un tel monomère ; de plus, rien ne peut attirer l'attention sur lui, tant les 5 produits mentionnés ci-dessus apparaissent anecdotiques parmi les 225 essais rassemblés dans lesdits documents ;
- le polymère objet des inventions correspondantes est toujours décrit comme hydrosoluble ;
- les exemples du document WO 08 / 149226 A1 font état d'une augmentation de la viscosité ACAV des sauces de couchage, ce qui rend a priori les polymères correspondant inadaptés à un couchage à extrait sec et/ou vitesse de dépose élevé.

Or, poursuivant ses recherches en vue de mettre au point un polymère capable d'augmenter la viscosité Brookfïeld™ d'une sauce, de diminuer sa viscosité ACAV tout en augmentant sa rétention d'eau, la Demanderesse a su identifier une classe particulière de polymères peignes (méth)acryliques, caractérisés en ce qu'ils sont des polymères non hydrosolubles, à la fois riches en monomère hydrophobe du type styrène ou ester acrylique en C1 à C4 et riches en monomère hydroxy ou méthoxy polyalkylène glycol.

En indiquant que les polymères dont l'utilisation fait l'objet de la présente invention sont non hydrosolubles, la Demanderesse entend signifier que lesdits polymères, en l'état, c'est à dire sous forme acide, ne sont pas solubles dans l'eau (à la différence des polymères exemplifiés dans les documents cités précédemment, qui sont hydrosolubles sous forme acide). En revanche, une fois salifiés, les polymères de la présente invention peuvent devenir solubles dans l'eau.

De manière inattendue car non suggérée par les documents précités, et contraire à l'enseignement du document WO 08 / 149226 A1 sur la viscosité ACAV, la sélection particulière opérée par la Demanderesse permet l'amélioration des 3 propriétés précitées. Cette amélioration correspond même à un compromis jamais réalisé avec les polymères ou autres additifs de l'art antérieur : non seulement on augmente ici la viscosité Brookfield™, mais on diminue aussi la viscosité ACAV des sauces et ce, par rapport à la même sauce ne contenant pas d'additif : un tel résultat n'avait encore jamais été atteint.

En ce sens, les polymères dont l'utilisation fait l'objet de la présente invention se comportent avantageusement comme des agents épaississants à bas gradient de cisaillement, et rhéofluidifiants sous haut gradient de cisaillement. De plus, ils se révèlent être des agents rétenteurs d'eau très efficaces. Ces résultats en font des candidats idéaux pour des procédés de couchage à extrait sec et/ou vitesse de dépose élevé. Seule la Demande de Brevet non encore publiée (n° de dépôt : FR 10 52605) était parvenue à un tel résultat au niveau des propriétés rhéologiques des sauces mais ce, pour des doses plus importantes, et sans maintien de la rétention d'eau.

De manière plus précise, les polymères mis en oeuvre dans la présente invention se présentent sous forme de dispersions aqueuses de particules de polymère hydrophobe. Ledit polymère est lui-même caractérisé en ce qu'il est constitué, en % en poids du poids total des monomères engagés :
a) de 30 % à 60 % d'un premier monomère hydroxy et/ou méthoxy polyalkylène glycol,
b) de 20 % à 60 % d'un deuxième monomère hydrophobe choisi parmi le styrène et les esters (méth)acryliques ayant de 1 à 4 atomes de carbone,
c) de 0,1 % à 20 % d'un troisième monomère carboxylique choisi parmi les acides acrylique et méthacrylique,
d) de 0 à 10 % d'un quatrième monomère éventuel dit « associatif »,
e) de 0 à 5 % d'un cinquième monomère éventuel dit « réticulant »,

la somme des % en poids des monomères a) à e) étant égale à 100 %.

Le % de monomère hydrophobe b) supérieur à 20 % assure notamment la nouveauté des polymères mis en oeuvre selon la présente invention, à l'égard de ceux utilisés dans l'art antérieur déjà cité. Il contribue en outre au caractère non hydrosoluble de ces additifs. Le % de monomère hydroxy et/ou méthoxy polyalkylène glycol supérieur à 30 % assure notamment la nouveauté de l'utilisation objet de la présente invention à l'égard de la mise en oeuvre de certains latex, et stabilisés à partir de tels motifs (voir notamment les documents EP 1 981 920 A1 et WO 94 24 202 A1). C'est le choix de l'ensemble des % précités qui conduit à des structures nouvelles et inventives, permettant de résoudre le problème technique complexe déjà évoqué dans le domaine des sauces de couchage.

Aussi, un premier objet de la présente invention réside dans l'utilisation, dans une sauce de couchage papetière, comme agent augmentant la viscosité Brookfïeld™, diminuant la viscosité ACAV et comme agent rétenteur d'eau, d'un polymère non hydrosoluble constitué de, exprimé en % en poids de chacun des monomères :
a) de 30 % à 60 % d'au moins un monomère hydroxy et/ou méthoxy polyalkylène glycol, de formule R - (OE)ₘ - (OP)ₙ - R', avec :
   - m et n désignant des entiers inférieurs ou égaux à 150 dont l'un au moins est non nul,
   - OE et OP désignant respectivement l'oxyde d'éthylène et l'oxyde de propylène,
   - R désignant la fonction méthacrylate ou méthacryluréthane,
   - R' désignant un groupement hydroxy ou méthoxy,
b) de 20 % à 60 % d'au moins un monomère hydrophobe choisi parmi le styrène et les esters (méth)acryliques ayant de 1 à 4 atomes de carbone,
c) de 0,1 % à 10 % d'au moins un monomère qui est l'acide acrylique et/ou méthacrylique,
d) de 0 à 5 % d'un monomère associatif, de formule R - (OE)ₘ - (OP)ₙ - R', avec
   - m et n désignant des entiers inférieurs ou égaux à 150 dont l'un au moins est non nul,
   - OE et OP désignant respectivement l'oxyde d'éthylène et l'oxyde de propylène,
   - R désignant la fonction méthacrylate ou méthacryluréthane,
   - R' désignant un groupement alkyle ou aryle ou alkylearyle ayant de 8 à 32 atomes de carbone, linéaire ou ramifié,
e) de 0 à 5 % d'un monomère ayant deux insaturations éthyléniques,

la somme des % a), b), c), d) et e) étant égale à 100 %.

Cette structure est obtenue par des procédés de polymérisation classiques, mettant en oeuvre des systèmes catalytiques connus comme décrit dans le document EP 1 981 920 A1 précité, mais aussi dans le document EP 0 819 704 A1.

Cette utilisation est aussi caractérisée en ce que ledit polymère présente une masse molaire moyenne en poids comprise entre 1 000 000 et 6 000 000 g/mol, telle que déterminée par GPC. On pourra notamment se reporter à la technique de mesure décrite dans le document WO 07 / 069037 A1.

Ledit polymère est obtenu par des procédés connus de copolymérisation radicalaire conventionnelle en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Il est obtenu sous forme acide et éventuellement distillé. Il peut être également partiellement ou totalement neutralisé par un ou plusieurs agents de neutralisation choisis préférentiellement parmi les hydroxydes de sodium et de potassium et leurs mélanges.

Un deuxième objet de la présente invention consiste en une sauce de couchage papetière contenant :
1) de 3 parts à 20 parts, préférentiellement de 5 parts à 15 parts en poids sec de liant, pour 100 parts en poids sec de matière minérale,
2) de 0,1 part à 2 parts, préférentiellement de 0,1 à 1,5 parts en poids sec de polymère, pour 100 parts en poids sec de matière minérale,
3) de l'eau dans une quantité en poids comprise entre 20 % et 80 %, par rapport au poids total de la sauce de couchage,
caractérisée en ce que ledit polymère est un polymère non hydrosoluble constitué de, exprimé en % en poids de chacun des monomères :
a) de 30 % à 60 % d'au moins un monomère hydroxy et/ou méthoxy polyalkylène glycol, de formule R - (OE)ₘ - (OP)ₙ - R', avec :
   - m et n désignant des entiers inférieurs ou égaux à 150 dont l'un au moins est non nul,
   - OE et OP désignant respectivement l'oxyde d'éthylène et l'oxyde de propylène,
   - R désignant la fonction méthacrylate ou méthacryluréthane,
   - R' désignant un groupement hydroxy ou méthoxy,
b) de 20 % à 60 % d'au moins un monomère hydrophobe choisi parmi le styrène et les esters (méth)acryliques ayant de 1 à 4 atomes de carbone,
c) de 0,1 % à 10 % d'au moins un monomère qui est l'acide acrylique et/ou méthacrylique,
d) de 0 à 5 % d'un monomère associatif, de formule R - (OE)ₘ - (OP)ₙ - R', avec :
   - m et n désignant des entiers inférieurs ou égaux à 150 dont l'un au moins est non nul,
   - OE et OP désignant respectivement l'oxyde d'éthylène et l'oxyde de propylène,
   - R désignant la fonction méthacrylate ou méthacryluréthane,
   - R' désignant un groupement alkyle ou aryle ou alkylearyle ayant de 8 à 32 atomes de carbone, linéaire ou ramifié,
e) de 0 à 5 % d'un monomère ayant deux insaturations éthyléniques,

la somme des % a), b), c), d) et e) étant égale à 100 %.

La Demanderesse indique que l'homme du métier peut alors ajouter d'autres additifs entrant dans la composition habituelle d'une sauce de couchage, tels que des biocides, des agents anti mousse, des azurants optiques et des supports d'azurant optique, sans pour autant que cette liste soit exhaustive.

Cette sauce est aussi caractérisée en ce qu'elle contient une matière minérale choisie parmi le carbonate de calcium naturel ou synthétique, le kaolin, le talc et les mélanges de ces charges.

Cette sauce est aussi caractérisée en ce que le liant est choisi parmi les liants hydrosolubles et notamment l'amidon, ou parmi les liants polymères latex synthétiques tels que les styrène-acrylique et les styrène-butadiène ou leurs mélanges, ou les mélanges de ces liants.

Cette sauce est aussi caractérisée en ce qu'elle contient de 20 % à 35 % en poids d'eau.

### EXEMPLES

Pour chacun de ces essais, on réalise une sauce de couchage constituée de :
- 100 parts en poids sec de carbonate de calcium commercialisé par la société OMYA™ sous le nom de Setacarb™ HG (à 78 % d'extrait sec),
- 8 parts en poids sec (par rapport au poids sec de carbonate de calcium) d'un latex styrène-butadiène commercialisé par la société DOW™ CHEMICALS sous le nom DL 966 (solution à 50 % d'extrait sec),
- 0,5 part en poids sec (par rapport au poids sec de carbonate de calcium) d'alcool polyvinylique commercialisé par la société CLARIANT™ sous le nom Mowiol™ 4-98 (solution à 25,2 % d'extrait sec),
- 0,5 part en poids sec (par rapport au poids sec de carbonate de calcium) d'un azurant optique commercialisé par la société BAYER™ sous le nom de Blancophor™ P (solide).

L'extrait sec de ladite sauce est fixé à 72 % de son poids total.

Son pH est ajusté à 8,6 par addition de soude.

Pour chaque sauce, on détermine :
- sa viscosité Brookfield™ à 100 tours / minute à 25°C,
- sa viscosité ACAV sous un gradient de cisaillement égal à 10⁶ s⁻¹ et à 25°C,
- sa rétention d'eau, avec un appareil du type AAGWR commercialisé par la société GRADEK™, selon la méthode décrite dans la Demande de Brevet française n° 05 12797 déjà citée dans le présent document.

### Essai n° 1

Cet essai constitue un témoin et ne met pas en oeuvre d'additif.

### Essai n° 2

Cet essai illustre l'art antérieur, selon les polymères décrits dans le document WO 2007 / 069037.

Il met en oeuvre 0,15 part en poids sec d'un copolymère constitué de, en % en poids de chaque monomère :
- 6 % d'acide acrylique et 1,8 % d'acide méthacrylique,
- 92,2 % d'un monomère de formule R - (OE)ₘ - (OP)ₙ - R'dans laquelle R représente le groupe méthacrylate, R' représente le radical méthyle, avec m = 113 et n = 0
son poids moléculaire étant égal à 250 000 g/mole, comme déterminé selon la méthode décrite dans le document WO 2007 / 069037.

### Essai n° 3

Cet essai illustre l'art antérieur, selon les polymères décrits dans le document WO 2007 / 069037.

Il met en oeuvre 0,15 part en poids sec d'un copolymère constitué de, en % en poids de chaque monomère :
- 15 % d'acide acrylique et 5 % d'acide méthacrylique,
- 80 % d'un monomère de formule R - (OE)ₘ - (OP)ₙ - R'dans laquelle R représente le groupe méthacrylate, R' représente le radical méthyle, avec m = 113 et n = 0,
son poids moléculaire étant égal à 970 000 g/mole, comme déterminé selon la méthode décrite dans le document WO 2007 / 069037.

### Essai n° 4

Cet essai illustre l'art antérieur, selon les polymères décrits dans le document WO 2007 / 069037.

Il met en oeuvre 0,15 part en poids sec d'un copolymère constitué de, en % en poids de chaque monomère :
- 30 % d'acide acrylique et 5 % d'acide méthacrylique,
- 65 % d'un monomère de formule R - (OE)ₘ - (OP)ₙ - R'dans laquelle R représente le groupe méthacrylate, R' représente le radical méthyle, avec m = 113 et n = 0
son poids moléculaire étant égal à 1 850 000 g/mole, comme déterminé selon la méthode décrite dans le document WO 2007 / 069037.

### Essai n° 5

Cet essai illustre l'art antérieur, selon les polymères décrits dans le document WO 2007 / 069037.

Il met en oeuvre 1 part en poids sec du copolymère mis en oeuvre dans l'essai n° 4.

### Essai n° 6

Cet essai illustre l'invention.

Il met en oeuvre 1 part en poids sec d'un copolymère constitué de, en % en poids de chaque monomère :
a) 34 % d'un monomère de formule R - (OE)ₘ - (OP)ₙ - R'dans laquelle R représente le groupe méthacrylate, R' représente le radical méthyle, avec m = 113 et n = 0,
b) 58 % d'acrylate d'éthyle,
c) 8 % d'acide acrylique,
son poids moléculaire étant égal à 38 000 g/mole, comme déterminé selon la méthode décrite dans le document WO 2007 / 069037.

### Essai n° 7

Cet essai illustre l'invention.

Il met en oeuvre 1 part en poids sec d'un copolymère constitué de, en % en poids de chaque monomère :
a) 38 % d'un monomère de formule R - (OE)ₘ - (OP)ₙ - R'dans laquelle R représente le groupe méthacrylate, R' représente l'hydrogène, avec m = 70 et n = 30,
b) 54 % d'acrylate d'éthyle,
c) 8 % d'acide acrylique,
son poids moléculaire étant égal à 45 000 g/mole, comme déterminé selon la méthode décrite dans le document WO 2007 / 069037.

### Essai n° 8

Cet essai illustre l'invention.

Il met en oeuvre 1 part en poids sec d'un copolymère constitué de, en % en poids de chaque monomère :
a) 40 % d'un monomère de formule R - (OE)ₘ - (OP)ₙ - R'dans laquelle R représente le groupe méthacrylate, R' représente l'hydrogène, avec m = 70 et n = 30,
b) 55 % d'acrylate d'éthyle,
c) 5 % d'acide acrylique,
son poids moléculaire étant égal à 39 000 g/mole, comme déterminé selon la méthode décrite dans le document WO 2007 / 069037.

### Essai n° 9

Cet essai illustre l'invention.

Il met en oeuvre 1 part en poids sec d'un copolymère constitué de, en % en poids de chaque monomère :
a) 44 % d'un monomère de formule R - (OE)ₘ - (OP)ₙ - R'dans laquelle R représente le groupe méthacrylate, R' représente l'hydrogène, avec m = 70 et n = 30,
b) 48 % d'acrylate d'éthyle,
c) 8 % d'acide acrylique,
son poids moléculaire étant égal à 51 000 g/mole, comme déterminé selon la méthode décrite dans le document WO 2007 / 069037.

### Essai n° 10

Cet essai illustre l'invention.

Il met en oeuvre 1 part en poids sec d'un copolymère constitué de, en % en poids de chaque monomère :
a) 43 % d'un monomère de formule R - (OE)ₘ - (OP)ₙ - R'dans laquelle R représente le groupe méthacrylate, R' représente l'hydrogène, avec m = 50 et n = 50,
b) 48 % d'acrylate d'éthyle,
c) 9 % d'acide acrylique,
son poids moléculaire étant égal à 54 000 g/mole, comme déterminé selon la méthode décrite dans le document WO 2007 / 069037.

### Essai n° 11

Cet essai illustre l'invention.

Il met en oeuvre 1 part en poids sec d'un copolymère constitué de, en % en poids de chaque monomère :
a) 40 % d'un monomère de formule R - (OE)ₘ - (OP)ₙ - R'dans laquelle R représente le groupe méthacrylate, R' représente l'hydrogène, avec m = 70 et n = 30,
b) 51 % de styrène,
c) 9 % d'acide acrylique,
son poids moléculaire étant égal à 60 000 g/mole, comme déterminé selon la méthode décrite dans le document WO 2007 / 069037.

Les résultats apparaissent dans le tableau 1.

**Tableau 1**

| | 1 | 2 | 3 | 4 | 5 | 6 | 7 | 8 | 9 | 10 | 11 |
|---|---|---|---|---|---|---|---|---|---|---|---|
| | REF | AA | AA | AA | AA | IN | IN | IN | IN | IN | IN |
| Bk100 (mPa.s) | 515 | 1100 | 1200 | 1260 | 8900 | 1150 | 1100 | 1190 | 1230 | 1210 | 1200 |
| ACAV 10⁶ s⁻¹ (mPa.s) | 253 | 270 | 280 | 300 | 450 | 200 | 180 | 198 | 205 | 200 | 200 |
| rétention (g/m2) | 146 | 98 | 90 | 88 | 55 | 101 | 94 | 95 | 85 | 90 | 95 |

Ce tableau démontre que les polymères selon l'art antérieur, mis en oeuvre à une dose comparable à celle décrite dans l'art antérieur (essai n° 1 à 4), permettent d'augmenter la viscosité Brookfield™ et d'améliorer la rétention d'eau, mais conduisent à une viscosité ACAV bien supérieure à celle de la référence.

Si on surdose la quantité de polymère selon l'art antérieur (essai n° 5 mettant en oeuvre 1 part de produit, par rapport aux essais n° 2 à 4 qui mettent en oeuvre 0,15 part de produit), on constate une très forte augmentation des viscosités ; or, comme déjà indiqué, on cherche à contrebalancer cette augmentation à haut gradient de cisaillement (viscosité ACAV).

Quant aux polymères selon l'invention (essais n° 6 à 11), ils permettent d'augmenter la viscosité Brookfield™ et d'améliorer la rétention d'eau à un niveau comparable à celui de l'art antérieur (essais n° 2 à 4).

Chose tout à fait remarquable, ce résultat est atteint non seulement en limitant l'augmentation de la viscosité ACAV, mais en réduisant cette dernière à un niveau inférieur à celui de la référence.

De tels copolymères sont donc particulièrement destinés à des couchages à haute vitesse et/ou à extrait sec de sauce élevé.

## Revendications

1. Utilisation, dans une sauce de couchage papetière, comme agent augmentant la viscosité Brookfield™, diminuant la viscosité ACAV et comme agent rétenteur d'eau, d'un polymère non hydrosoluble constitué de, exprimé en % en poids de chacun des monomères :
a) de 30 % à 60 % d'au moins un monomère hydroxy et/ou méthoxy polyalkylène glycol, de formule R - (OE)ₘ - (OP)ₙ - R', avec :
- m et n désignant des entiers inférieurs ou égaux à 150 dont l'un au moins est non nul,
- OE et OP désignant respectivement l'oxyde d'éthylène et l'oxyde de propylène,
- R désignant la fonction méthacrylate ou méthacryluréthane,
- R' désignant un groupement hydroxy ou méthoxy,
b) de 20 % à 60 % d'au moins un monomère hydrophobe choisi parmi le styrène et les esters (méth)acryliques ayant de 1 à 4 atomes de carbone,
c) de 0,1 % à 10 % d'au moins un monomère qui est l'acide acrylique et/ou méthacrylique,
d) de 0 à 5 % d'un monomère associatif, de formule R - (OE)ₘ - (OP)ₙ - R', avec :
- m et n désignant des entiers inférieurs ou égaux à 150 dont l'un au moins est non nul,
- OE et OP désignant respectivement l'oxyde d'éthylène et l'oxyde de propylène,
- R désignant la fonction méthacrylate ou méthacryluréthane,
- R' désignant un groupement alkyle ou aryle ou alkylearyle ayant de 8 à 32 atomes de carbone, linéaire ou ramifié,
e) de 0 à 5 % d'un monomère ayant deux insaturations éthyléniques,
la somme des % a), b), c), d) et e) étant égale à 100 %.

2. Utilisation selon la revendication 1, **caractérisée en ce que** ledit polymère présente une masse molaire moyenne en poids comprise entre 1 000 000 et 6 000 000 g/mol, telle que déterminée par GPC.

3. Utilisation selon une des revendications 1 ou 2, **caractérisée en ce que** ledit polymère est obtenu par des procédés de copolymérisation radicalaire conventionnelle en solution, en émulsion directe ou inverse, en suspension ou précipitation ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

4. Utilisation selon une des revendications 1 à 3, **caractérisée en ce que** ledit polymère est obtenu sous forme acide et éventuellement distillé.

5. Utilisation selon une des revendications 1 à 4, **caractérisée en ce que** ledit polymère est partiellement ou totalement neutralisé par un ou plusieurs agents de neutralisation choisis préférentiellement parmi les hydroxydes de sodium et de potassium et leurs mélanges.

6. Sauce de couchage papetière contenant :
1) de 3 parts à 20 parts, préférentiellement de 5 parts à 15 parts en poids sec de liant, pour 100 parts en poids sec de matière minérale,
2) de 0,1 part à 2 parts, préférentiellement de 0,1 à 1,5 parts en poids sec de polymère, pour 100 parts en poids sec de matière minérale,
3) de l'eau dans une quantité en poids comprise entre 20 % et 80 %, par rapport au poids total de la sauce de couchage,
**caractérisée en ce que** ledit polymère est un polymère non hydrosoluble constitué de, exprimé en % en poids de chacun des monomères :
a) de 30 % à 60 % d'au moins un monomère hydroxy et/ou méthoxy polyalkylène glycol, de formule R - (OE)ₘ - (OP)ₙ - R', avec :
- m et n désignant des entiers inférieurs ou égaux à 150 dont l'un au moins est non nul,
- OE et OP désignant respectivement l'oxyde d'éthylène et l'oxyde de propylène,
- R désignant la fonction méthacrylate ou méthacryluréthane,
- R' désignant un groupement hydroxy ou méthoxy,
b) de 20 % à 60 % d'au moins un monomère hydrophobe choisi parmi le styrène et les esters (méth)acryliques ayant de 1 à 4 atomes de carbone,
c) de 0,1 % à 10 % d'au moins un monomère qui est l'acide acrylique et/ou méthacrylique,
d) de 0 à 5 % d'un monomère associatif, de formule R - (OE)ₘ - (OP)ₙ - R', avec :
- m et n désignant des entiers inférieurs ou égaux à 150 dont l'un au moins est non nul,
- OE et OP désignant respectivement l'oxyde d'éthylène et l'oxyde de propylène,
- R désignant la fonction méthacrylate ou méthacryluréthane,
- R' désignant un groupement alkyle ou aryle ou alkylearyle ayant de 8 à 32 atomes de carbone, linéaire ou ramifié,
e) de 0 à 5 % d'un monomère ayant deux insaturations éthyléniques,
la somme des % a), b), c), d) et e) étant égale à 100 %.

7. Sauce selon la revendication 6, **caractérisée en ce qu'**elle contient une matière minérale choisie parmi le carbonate de calcium naturel ou synthétique, le kaolin, le talc et les mélanges de ces charges.

8. Sauce selon une des revendications 6 ou 7, **caractérisée en ce que** le liant est choisi parmi les liants hydrosolubles et notamment l'amidon, ou parmi les liants polymères latex synthétiques tels que les styrène-acrylique et les styrène-butadiène ou leurs mélanges, ou les mélanges de ces liants.

9. Sauce selon une des revendications 6 à 8, **caractérisée en ce qu'**elle contient de 20 % à 35 % en poids d'eau.

## Patentansprüche

1. Verwendung, in einer Papierstreichmasse, eines wasserunlöslichen Polymers als Mittel zur Erhöhung der Brookfield^{™}-Viskosität und zur Verringerung der ACAV-Viskosität sowie als Wasserrückhaltemittel, wobei das Polymer die folgenden Bestandteile aufweist, ausgedrückt in Gewichts-% jedes der Monomere:
a) 30 % bis 60 % mindestens eines Hydroxy- und/oder Methoxypolyalkylenglykol-Monomers der Formel R - (OE)ₘ - OP)ₙ - R', wobei:
- m und n ganze Zahlen bezeichnen, die kleiner oder gleich 150 sind, wobei mindestens eine davon von Null verschieden ist,
- OE und OP Ethylenoxid beziehungsweise Propylenoxid bezeichnen,
- R die Methacrylat- oder Methacrylurethanfunktion bezeichnet,
- R' eine Hydroxy- oder Methoxygruppe bezeichnet,
b) 20 % bis 60 % mindestens eines hydrophoben Monomers, das aus Styrol und den (Meth)acrylsäureestern mit 1 bis 4 Kohlenstoffatomen ausgewählt ist,
c) 0,1 % bis 10 % mindestens eines Monomers, bei welchem es sich um Acryl- und/oder Methacrylsäure handelt,
d) 0 bis 5 % eines assoziierenden Monomers der Formel R - (OE)ₘ - (OP)ₙ - R', wobei:
- m und n ganze Zahlen bezeichnen, die kleiner oder gleich 150 sind, wobei mindestens eine davon von Null verschieden ist,
- OE und OP Ethylenoxid beziehungsweise Propylenoxid bezeichnen,
- R die Methacrylat- oder Methacrylurethanfunktion bezeichnet,
- R' eine geradkettige oder verzweigte Alkyl- oder Aryl- oder Alkylarylgruppe mit 8 bis 32 Kohlenstoffatomen bezeichnet,
e) 0 bis 5 % eines Monomers mit zwei ethylenisch ungesättigten Stellen,
wobei die Summe der Prozentanteile a), b), c), d) und e) gleich 100 % ist.

2. Verwendung nach Anspruch 1, **dadurch gekennzeichnet, dass** das Polymer ein Gewichtsmittel des Molekulargewichts im Bereich von 1.000.000 g/mol bis 6.000.000 g/mol aufweist, gemäß einer Bestimmung mittels GPC.

3. Verwendung nach einem der Ansprüche 1 oder 2, **dadurch gekennzeichnet, dass** das Polymer mittels Verfahren der herkömmlichen radikalischen Copolymerisation in Lösung, in direkter oder umgekehrter Emulsion, in Suspension oder mit Fällungsvorgang hergestellt wird, oder aber mittels Verfahren der kontrollierten radikalischen Polymerisation wie etwa des Verfahrens, welches als Reversible Addition Fragmentation Transfer (RAFT) bezeichnet wird, des Verfahrens, welches als Atom Transfer Radical Polymerization (ATRP) bezeichnet wird, des Verfahrens, welches als Nitroxide Mediated Polymerization (NMP) bezeichnet wird, oder aber des Verfahrens, welches als Cobaloxim-vermittelte freie radikalische Polymerisation bezeichnet wird.

4. Verwendung nach einem der Ansprüche 1 bis 3, **dadurch gekennzeichnet, dass** das Polymer in saurer Form erhalten wird und möglicherweise destilliert wird.

5. Verwendung nach einem der Ansprüche 1 bis 4, **dadurch gekennzeichnet, dass** das Polymer teilweise mit einem oder mehreren Neutralisierungsmitteln neutralisiert ist, die aus den Hydroxiden von Natrium und von Kalium und deren Mischungen ausgewählt sind.

6. Papierstreichmasse, enthaltend:
1) 3 Teile bis 20 Teile, vorzugsweise 5 Teile bis 15 Teile nach Trockengewicht an Bindemittel, auf 100 Teile nach Trockengewicht an Mineralstoff,
2) 0,1 Teile bis 2 Teile, vorzugsweise 0,1 Teile bis 1,5 Teile nach Trockengewicht an Polymer, auf 100 Teile nach Trockengewicht an Mineralstoff,
3) Wasser in einer gewichtsmäßigen Menge, die im Bereich von 20 % bis 80 % liegt, unter Bezugnahme auf das Gesamtgewicht der Streichmasse,
**dadurch gekennzeichnet, dass** das Polymer ein wasserunlösliches Polymer ist, welches die folgenden Bestandteile aufweist, ausgedrückt in Gewichts-% jedes der Monomere:
a) 30 % bis 60 % mindestens eines Hydroxy- und/oder Methoxypolyalkylenglykol-Monomers der Formel R - (OE)ₘ - OP)ₙ - R', wobei:
- m und n ganze Zahlen bezeichnen, die kleiner oder gleich 150 sind, wobei mindestens eine davon von Null verschieden ist,
- OE und OP Ethylenoxid beziehungsweise Propylenoxid bezeichnen,
- R die Methacrylat- oder Methacrylurethanfunktion bezeichnet,
- R' eine Hydroxy- oder Methoxygruppe bezeichnet,
b) 20 % bis 60 % mindestens eines hydrophoben Monomers, das aus Styrol und den (Meth)acrylsäureestern mit 1 bis 4 Kohlenstoffatomen ausgewählt ist,
c) 0,1 % bis 10 % mindestens eines Monomers, bei welchem es sich um Acryl- und/oder Methacrylsäure handelt,
d) 0 bis 5 % eines assoziierenden Monomers der Formel R - (OE)ₘ - (OP)ₙ - R', wobei
- m und n ganze Zahlen bezeichnen, die kleiner oder gleich 150 sind, wobei mindestens eine davon von Null verschieden ist,
- OE und OP Ethylenoxid beziehungsweise Propylenoxid bezeichnen,
- R die Methacrylat- oder Methacrylurethanfunktion bezeichnet,
- R' eine geradkettige oder verzweigte Alkyl- oder Aryl- oder Alkylarylgruppe mit 8 bis 32 Kohlenstoffatomen bezeichnet,
e) 0 bis 5 % eines Monomers mit zwei ethylenisch ungesättigten Stellen,
wobei die Summe der Prozentanteile a), b), c), d) und e) gleich 100 % ist.

7. Masse nach eAnspruch 6, **dadurch gekennzeichnet, dass** sie einen Mineralstoff enthält, der aus natürlichem oder synthetischem Calciumcarbonat, Kaolin, Talkum und den Mischungen dieser Füllstoffe ausgewählt ist.

8. Masse nach einem der Ansprüche 6 oder 7, **dadurch gekennzeichnet, dass** das Bindemittel aus den wasserlöslichen Bindemitteln und insbesondere aus Stärke, oder aus den Polymerbindemitteln des Typs synthetischer Latex wie etwa des Typs Styrol-Acryl und StyrolButadien oder deren Mischungen, oder aber Mischungen dieser Bindemittel ausgewählt ist.

9. Masse nach einem der Ansprüche 6 bis 8, **dadurch gekennzeichnet, dass** sie 20 bis 35 Gewichts-% an Wasser enthält.

## Claims

1. Use, in a paper coating color, as an agent increasing the Brookfield™ viscosity, reducing the ACAV viscosity, and as a water-retention agent, of a non-water-soluble polymer made up of, expressed as a % by weight of each of the monomers:
a) from 30% to 60% of at least one hydroxy- and/or methoxy-polyalkylene glycol monomer, with formula R - (EO)ₘ - (PO)ₙ - R', where:
- m and n designate integers less than or equal to 150, at least one of which is non-zero,
- EO and PO respectively designate ethylene oxide and propylene oxide,
- R designates the methacrylate or methacrylurethane goup,
- R' designates a hydroxy or methoxy group,
b) from 20% to 60% of at least of a hydrophobic monomer chosen from among styrene and (meth)acrylic esters having 1 to 4 carbon atoms,
c) from 0.1% to 10% of at least one monomer, which is acrylic and/or methacrylic acid,
d) from 0 to 5% of an associative monomer, with formula R - (EO)ₘ - (PO)ₙ - R', where:
- m and n designate integers less than or equal to 150, at least one of which is non-zero,
- EO and PO respectively designate ethylene oxide and propylene oxide,
- R designates the methacrylate or methacrylurethane group,
- R' designates an alkyl or aryl or alkylaryl group having 8 to 32 linear or branched carbon atoms,
e) from 0 to 5% of a monomer having two ethylenic unsaturations,
the sum of % a), b), c), d), and e) being equal to 100%.

2. Use according to claim 1, **characterized in that** said polymer exhibits an average molar mass by weight of between 1,000,000 and 6,000,000 g/mol, as determined by GPC.

3. Use according to one of claims 1 or 2, **characterized in that** said polymer is obtained by known methods of conventional radical copolymerization in a solution, in a direct or inverse emulsion, in suspension or precipitation, or by radical mediated polymerization methods such as the method known as Reversible Addition Fragmentation Transfer (RAFT), the method known as Atom Transfer Radical Polymerization (ATRP), the method known as Nitroxide Mediated Polymerization (NMP) or the method known as Cobaloxime Mediated Free Radical Polymerization.

4. Use according to one of claims 1 to 3, **characterized in that** said polymer is obtained in acid form, and is potentially distilled.

5. Use according to one of claims 1 to 4, **characterized in that** said polymer is partially or fully neutralized by one or more neutralization agents preferentially chosen among the sodium and potassium hydroxides and mixtures thereof.

6. Paper coating color containing:
1) from 3 parts to 20 parts, more preferably from 5 parts to 15 parts by dry weight of the binder, per 100 parts by dry weight of mineral material,
2) from 0.1 part to 2 parts, more preferably from 0.1 part to 1.5 part by dry weight of the polymer, per 100 parts by dry weight of mineral material,
3) water in a quantity by weight of between 20% and 80%, compared to the total weight of the paper coating color,
**characterized in that** said polymer is a non-water-soluble polymer made up, expressed as a % by weight of each of the monomers:
a) from 30% to 60% of at least one hydroxy- and/or methoxy-polyalkylene glycol monomer, with formula R - (EO)ₘ - (PO)ₙ - R', where:
- m and n designate integers less than or equal to 150, at least one of which is non-zero,
- EO and PO respectively designate ethylene oxide and propylene oxide,
- R designates the methacrylate or methacrylurethane group,
- R' designates a hydroxy or methoxy group,
b) from 20% to 60% of at least one hydrophobic monomer chosen from among styrene and (meth)acrylic esters having 1 to 4 carbon atoms,
c) from 0.1% to 10% of at least one monomer, which is acrylic and/or methacrylic acid,
d) from of 0 to 5% of an associative monomer, which formula R - (EO)ₘ - (PO)ₙ - R', where:
- m and n designate integers less than or equal to 150, at least one of which is non-zero,
- EO and PO respectively designate ethylene oxide and propylene oxide,
- R designates the methacrylate or methacrylurethane function,
- R' designates an alkyl or aryl or alkylaryl group having 8 to 32 linear or branched carbon atoms,
e) from 0 to 5% of a monomer having two ethylenic unsaturations,
the sum of % a), b), c), d), and e) being equal to 100%.

7. Paper coating according to claim 6, **characterized in that** it contains a mineral material chosen from among natural or synthetic calcium carbonate, kaolin, talc, and mixtures of these loads.

8. Paper coating according to one of the claims 6 or 7, **characterized in that** the binder is chosen from among water-soluble binders, and particularly starch, or from among synthetic latex polymer binders such as styrene-acrylic and styrene-butadiene or mixtures thereof, or mixtures of these binders.

9. Paper coating according to one of the claims 6 to 8, **characterized in that** it contains 20% to 35% water by weight.
